# FASCICULE DE BREVET EUROPEEN

(11) **EP 3 295 009 B1**
(45) Date de publication et mention de la délivrance du brevet: **20.11.2019**
(21) Numéro de dépôt: 16727756.5
(22) Date de dépôt: 11.05.2016
(51) Int. Cl.: F02K 1/34, F02K 1/38, F02K 1/48

(54) **MÉLANGEUR À LOBES AVEC ÉCOPES**
BLÜTENMISCHER MIT SCHÖPFERN
LOBED MIXER WITH SCOOPS

(30) Priorité: 12.05.2015 FR 1554232
(43) Date de publication de la demande: 21.03.2018
(73) Titulaire: Safran Aircraft Engines, 75015 Paris (FR)
(72) Inventeur: PROUTEAU, Jackie, Raymond, Julien, 77550 Moissy-Cramayel Cedex (FR)
(74) Mandataire: Gevers & Orès
(86) Numéro de dépôt international: PCT/FR2016/051107
(87) Numéro de publication internationale: WO 2016/181072

(56) Documents cités:
- US-A- 2 944 624
- US-A- 3 002 341
- US-A- 3 227 240
- US-A- 3 592 291
- US-A- 4 754 924

## Description

### Domaine technique :

La présente invention est relative aux mélangeurs de flux gazeux confluents dans les turbomachines, notamment les turbomachines à double flux.

### Etat de l'art :

Généralement, une turbomachine à double flux comporte une tuyère de sortie dans laquelle le flux primaire des gaz chauds provenant du moteur conflue avec un flux d'air secondaire froid, propulsé par une hélice de soufflante.

Typiquement, une telle tuyère à flux confluents se compose d'un capot primaire centré sur l'axe longitudinal de la turbomachine, d'un capot secondaire disposé concentriquement au capot primaire de façon à définir un canal annulaire pour l'écoulement du flux secondaire, et d'un corps central définissant avec le capot primaire un deuxième canal annulaire pour l'écoulement du flux primaire, le capot secondaire s'étendant au-delà du capot primaire.

Généralement un mélangeur est monté à l'extrémité aval du capot primaire, en particulier pour réduire le bruit de jet en sortie de la tuyère en forçant le mélange entre le flux chaud primaire et le flux froid secondaire avant leur éjection. Il est en effet bien connu que des gains acoustiques sont obtenus en augmentant le mélange entre le flux froid et le flux chaud sortant de la turbomachine avant leur éjection. De ce point de vue, il est utile que le mélange entre les flux se fasse le plus rapidement possible, au niveau du trajet à l'intérieur du capot secondaire.

Parmi les mélangeurs pour tuyères à flux confluents, on connaît en particulier le mélangeur de type marguerite qui se présente sous la forme d'une partie sinusoïdale définissant des lobes intérieurs et des lobes extérieurs répartis sur toute la circonférence du capot primaire de la tuyère. Avec un mélangeur de type marguerite, les lobes intérieurs forment des goulottes guidant radialement le flux froid vers le second canal dans lequel circule le flux chaud, et les lobes extérieurs forment des goulottes guidant radialement le flux chaud vers le canal dans lequel circule le flux froid. Ainsi, à la sortie du mélangeur, le flux froid et le flux chaud se mélangent par cisaillement selon une direction essentiellement radiale.

Ce mélange permet de générer des tourbillons dont l'axe de rotation est globalement axial et dont l'intensité dépend principalement des conditions d'éjection des deux flux et des conditions d'alimentation du fond des lobes du mélangeur. Or ces conditions ne permettent pas toujours, en particulier pour certaines conditions d'utilisation de la turbomachine comme les phases de décollage de l'avion, d'obtenir une efficacité suffisante du mélangeur pour réduire l'intensité du bruit de jet aux niveaux recherchés. On constate en effet, que l'inhomogénéité du mélange des flux peut persister sur une distance égale à plusieurs fois le diamètre de sortie de la tuyère avant de se résorber.
De nombreuses optimisations de la forme des lobes sont utilisées pour améliorer l'efficacité d'un mélangeur à lobes de type marguerite en créant le moins de perte de charge possible. La demanderesse a par exemple proposé des mélangeurs à lobes courbés dans la demande de brevet FR2902469 dans le but de créer un mélange des flux dans la direction circonférentielle. Dans une autre configuration, décrite dans la demande EP1870588, l'inclinaison radiale des lobes induit un mouvement giratoire global des flux qui augmente les effets de cisaillement entre les flux. Suivant une autre configuration, le brevet US3592291 et brevet US3002341 (dans un de ses modes de réalisation) décrivent un mélangeur à lobes dont les parois présentent des écopes.

La présente invention a pour but de proposer une alternative aux solutions existantes en vue de poursuivre l'amélioration de l'efficacité d'un mélangeur à lobes.

### Présentation de l'invention:

L'invention concerne à cet effet un mélangeur à lobes, selon les caractéristiques de la revendication 1, destiné à être placé à l'extrémité aval d'un capot de séparation des deux veines coaxiales, respectivement interne et externe, le mélangeur comportant au moins une succession périphérique de lobes d'orientation générale radiale par rapport à un axe longitudinal du mélangeur, chaque lobe formant une goulotte s'étendant principalement suivant l'axe longitudinal, et au moins une succession périphérique d'écopes de passage depuis la première veine jusqu'à la deuxième veine et/ou, inversement, depuis la deuxième veine jusqu'à la première veine, placées sur lesdits lobes, au moins l'une desdites écopes étant formée par une ouverture d'une paroi du mélangeur au niveau des lobes, l'ouverture étant allongée suivant une direction donnée de composante principalement axiale, et par un capot situé entièrement du côté d'une desdites première veine et deuxième veine par rapport à ladite paroi, ledit capot étant raccordé au bord de l'ouverture sauf sur une partie aval, de manière à constituer un orifice de passage entre les deux veines, le bord de ladite ouverture comportant deux parties latérales qui s'écartent progressivement en allant de l'amont vers l'aval.

L'écope crée un cisaillement supplémentaire en amont du bord de fuite du mélangeur qui vient s'ajouter à celui créé par les lobes.

Ce type d'écope correspond à des écopes de type « flush », qui aspirent l'écoulement d'un côté et le chassent de l'autre. La forme spécifique des écopes utilisées entraîne une faible perte de charge dans l'écoulement à leur passage.

De plus, la configuration de l'ouverture évasée ou s'écartant progressivement de l'amont vers l'aval permet à une partie de l'écoulement en sortie de l'écope de s'évaser et de former des structures tourbillonnaires qui amplifient et homogénéisent les effets de mélange entre le flux froid et le flux chaud ce qui limite davantage les niveaux de réduction de bruit de jet obtenus lors des phases de décollage de l'avion.

Les deux parties latérales du bord de l'ouverture peuvent donner une forme convexe à ladite ouverture.

Suivant une autre caractéristique de l'invention, le capot présente une partie plate correspondant à la forme de l'ouverture et s'écartant progressivement de la paroi du lobe de manière à former une rampe.

Plusieurs desdites écopes peuvent être disposées entre des lignes de fond des goulottes formées par deux lobes successifs dans le sens circonférentiel. Autrement dit, au moins une paroi latérale d'un lobe peut comporter plusieurs desdites écopes. Une telle configuration permet d'augmenter l'effet de cisaillement tangentiel des écopes flush.

Dans un mode de réalisation particulier, le mélangeur comporte des écopes dont le capot est situé du côté de la deuxième veine.

Ledit mélangeur à lobes peut également comporter des écopes dont le capot est situé du côté de la première veine.

Deux écopes ayant des directions d'allongement différentes peuvent être disposées entre des lignes de fond des goulottes formées par deux lobes successifs dans le sens circonférentiel. Autrement dit, au moins une paroi latérale d'un lobe peut comporter deux écopes ayant des directions d'allongement différentes.

Au moins une écope de passage depuis la première veine jusqu'à la deuxième veine et une écope de passage depuis la deuxième veine jusqu'à la première veine, peuvent être disposés entre des lignes de fond des goulottes formées par deux lobes successifs dans le sens circonférentiel

Dans ledit mélangeur à lobes, lesdits lobes peuvent former des goulottes dont des lignes de fond avec alternativement un angle d'incidence positive et négative vers l'aval par rapport à l'axe longitudinal se succèdent de manière circonférentielle.

L'invention concerne également une turbomachine comportant un mélangeur à lobes tel que décrit précédemment.

### Brève description des dessins :

La présente invention sera mieux comprise et d'autres détails, caractéristiques et avantages de la présente invention apparaîtront plus clairement à la lecture de la description qui suit, en référence aux dessins annexés sur lesquels :
La figure 1 représente schématiquement une coupe axiale d'une turbomachine utilisant l'invention.
La figure 2 représente une première variante du mélangeur à lobes selon l'invention vue de l'arrière en perspective.
La figure 3a représente schématiquement une écope utilisée pour l'invention, vue en perspective de l'avant par le côté où l'écoulement est aspiré.
La figure 3b représente schématiquement une écope utilisée pour l'invention, vue en perspective de l'arrière par le côté où l'écoulement aspiré débouche.
La figure 4a représente en perspective un lobe du mélangeur selon un premier mode de réalisation de l'invention.
La figure 4b représente le lobe de la figure 4a, vu de l'arrière du mélangeur.
Les figures 5a, 5b, 5c représentent différentes variantes de réalisation du premier mode de réalisation sur un lobe du mélangeur vu en perspective.
La figure 6a représente en perspective un lobe du mélangeur selon un deuxième mode de réalisation de l'invention.
La figure 6b représente le lobe de la figure 6a, vu de l'arrière du mélangeur.

### Description d'un mode de réalisation de l'invention :

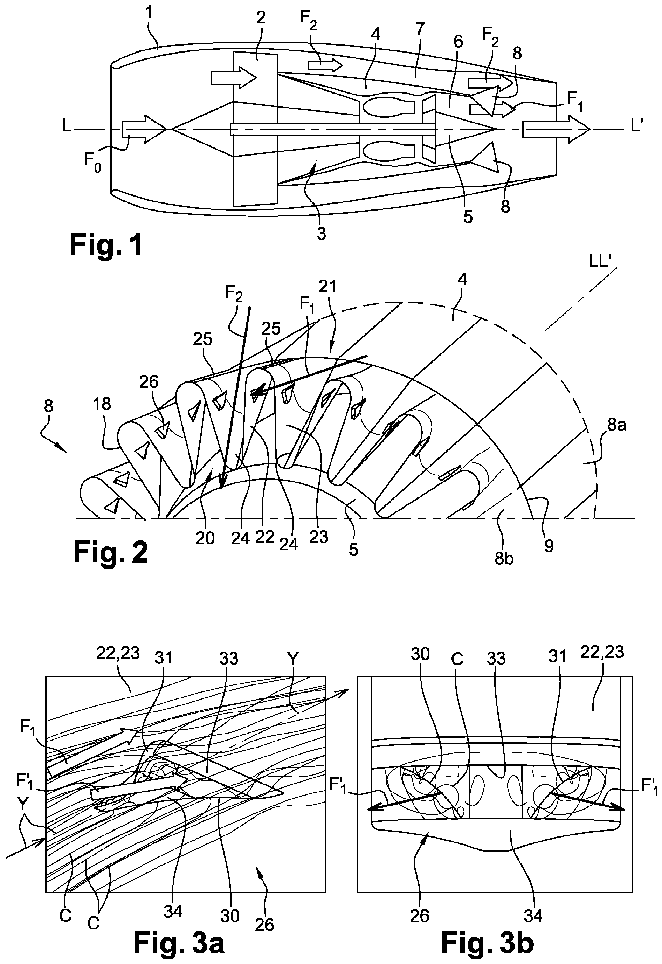

L'invention concerne, par exemple, une turbomachine double flux comme celle schématiquement présentée sur la figure 1. Le type de turbomachine dans lequel il est prévu d'utiliser l'invention est généralement à symétrie de révolution autour de son axe longitudinal LL'. Par convention, les notions de rayon, de plan axial et de plan transverse sont utilisées dans la description par rapport à cet axe LL'. Par ailleurs, les notions d'amont et d'aval sont prises ici le long de l'axe LL' en référence au sens principal des écoulements dans la turbomachine, tel que représenté par les flèches F₀, F₁ et F₂.

La turbomachine comprend ici, une nacelle 1 entourant la turbomachine et dans laquelle entre un flux d'air F₀. Ce flux d'air F₀ est entraîné par une soufflante 2 en sortie de laquelle il se divise en un flux d'air, passant dans le moteur 3, et un flux d'air secondaire F₂, passant entre la nacelle 1 et un capot 4 entourant le moteur 3. Les gaz sortant du moteur 3 forment un flux de gaz primaire F₁, qui rencontre le flux d'air secondaire F₂ à l'extrémité aval du capot 4 du moteur 3.

Sur l'exemple présenté, bien que ce ne soit pas limitatif, le capot 4 et un corps central 5 forment une veine primaire 6 du flux primaire F₁, ayant une forme annulaire, tandis que le capot 4 et la nacelle 1 forment une veine secondaire 7 du flux secondaire F₂, également annulaire. De même, ici, la confluence entre les veines 6, 7 se fait dans un conduit entouré par la nacelle 1 mais, dans d'autres configurations de turbomachine, cette confluence peut se faire à l'extérieur de la nacelle 1.

L'invention concerne plus particulièrement un mélangeur à lobes 8, placé ici à la confluence entre la veine primaire 6 et la veine secondaire 7.

En référence à la figure 2, le mélangeur à lobes 8 selon l'invention comporte une partie sensiblement cylindrique 8a se raccordant à l'extrémité aval du capot 4 et, en aval d'une section transversale 9, une extrémité ondulée 8b destinée à dévier les flux primaire F₁ et secondaire F₂ pour favoriser leur mélange. Cette extrémité ondulée 8b a un bord aval 18 formant l'extrémité aval du mélangeur 8.

Dans la description qui suit, les termes « intérieur » et « extérieur » désignent un élément du mélangeur ou de son environnement respectivement proche ou éloigné de l'axe longitudinal LL'.

L'extrémité ondulée 8b comporte une série d'ondulations sensiblement sinusoïdales définissant une série de lobes intérieurs 20 et de lobes extérieurs 21, du type marguerite. Les lobes intérieurs 20 et les lobes extérieurs 21 du mélangeur sont disposés en alternance les uns par rapport aux autres et peuvent être répartis de façon régulière sur toute la circonférence du mélangeur 8.

Comme présenté sur la figure 2, un lobe intérieur 20 peut être défini comme une goulotte comprenant des parois latérales 22, 23 se raccordant le long d'une ligne de fond 24, qui délimite le rayon minimal du lobe 20 dans une section transverse. Cette ligne de fond 24 s'étend radialement vers l'intérieur en partant de la section transversale 9 suivant la direction axiale LL'. Les deux parois latérales s'écartent de la ligne de fond 24 en allant vers l'extérieur, ce qui définit une orientation générale radiale dudit lobe, qui est dirigée vers l'intérieur.

De manière inversée, un lobe extérieur 21 peut être défini également comme une goulotte comprenant des parois latérales 23, 22 ayant un bord longitudinal commun, correspondant cette fois à une ligne de fond 25 s'étendant radialement vers l'extérieur en partant de la section transversale 9 suivant la direction axiale LL'. Ces deux parois latérales s'écartent en allant vers l'extérieur, de la ligne de fond 25 qui définit ici le rayon maximal du lobe extérieur 21, ce qui définit une orientation générale radiale dudit lobe, qui est dirigée vers l'extérieur.

Ici, on peut considérer qu'un lobe, intérieur 20 ou extérieur 21, partage ses parois latérales avec les lobes adjacents, une paroi latérale 22, 23 ayant pour bords longitudinaux opposés deux lignes dorsales 24, 25 successives et s'étendant radialement dans des directions inverses.

Avantageusement, les parois latérales 22, 23 se raccordent avec continuité de tangente sur les lignes de fond 24, 25. Elles présentent donc un profil transverse arrondi à ce niveau. Avantageusement aussi, elles présentent une partie intermédiaire sensiblement plane entre leurs extrémités arrondies.

Cette partie intermédiaire plane peut être sensiblement orientée suivant un plan radial de la turbomachine. Les lobes intérieurs 20 et les lobes extérieurs 21 peuvent ne pas avoir la même largeur circonférentielle. Généralement les lobes extérieurs 21 sont plus étroits que les lobes intérieurs 20.

Les lignes de fond 24 des lobes intérieurs 20 peuvent s'étendre plus en aval que les lignes de fond 25 des lobes extérieurs 21. Par ailleurs, les parois latérales 22, 23 se terminent en aval par un bord aval appartenant à l'extrémité aval 18 du mélangeur 8.

Par ailleurs, les lobes intérieurs 20 font saillie radialement vers l'intérieur du carter 4, c'est-à-dire qu'ils pénètrent dans le prolongement de la veine primaire 6, tandis que les lobes extérieurs 21 font saillie radialement vers l'extérieur du carter 4, c'est-à-dire qu'ils pénètrent dans le prolongement de la veine secondaire 7.

En référence à la figure 2, un lobe extérieur 21 forme donc une goulotte qui guide principalement l'écoulement primaire F₁ vers l'extérieur et un lobe intérieur 20 forme une goulotte qui guide principalement l'écoulement secondaire F₂ vers l'intérieur, en sortie du mélangeur 8. De la sorte un cisaillement globalement radial est créé entre le flux primaire F₁ et le flux secondaire F₂ en sortie du mélangeur à lobes 8, favorisant le mélange.

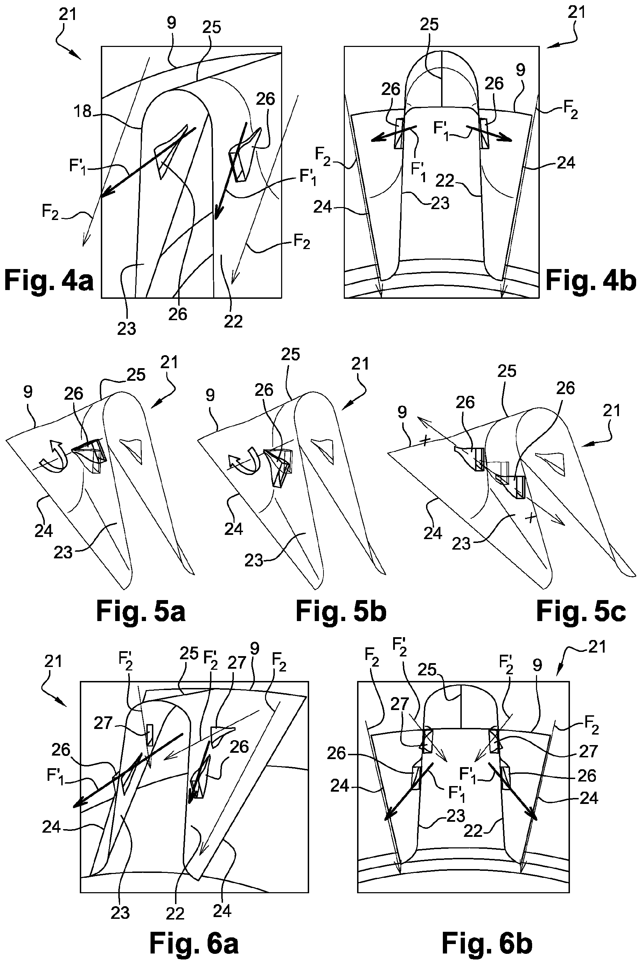

Dans un mode de réalisation préféré de l'invention, en référence aux figures 2 et 4, une écope 26 est installée sur chaque face latérale 22, 23 des lobes, de manière à prélever une partie F'₁ de l'écoulement primaire longeant la paroi latérale 22, 23 dans le lobe extérieur 21 pour la souffler dans le lobe intérieur 20. De préférence, cette écope 26 est installée dans la partie sensiblement plane de la paroi latérale 22, 23.

De préférence, en référence aux figures 3a et 3b, il s'agit d'une écope de type « chasse » (appelée par la suite écope « flush » selon la terminologie anglo-saxonne).

Une écope 26 « flush » comporte une ouverture pratiquée dans la paroi latérale 22, 23, allongée suivant une direction déterminée Y. Ici la direction Y est orientée dans un sens tel qu'elle fasse un angle faible, voire nul, avec les lignes de courant C du flux d'écoulement primaire F1 longeant la paroi latérale. On peut donc considérer que la direction Y est orientée de l'amont vers l'aval.

L'ouverture va en s'élargissant de l'amont vers l'aval, entre deux bords latéraux 30, 31 et elle comporte un bord aval 33 sensiblement transverse à la direction Y.

L'écope 26 comporte également un capot 34, situé ici entièrement du côté du lobe intérieur 20 par rapport à la paroi latérale, ledit capot 34 étant raccordé aux bords 30, 31 de l'ouverture sauf sur le bord aval 33, de manière à constituer un orifice de communication entre les deux côtés de la paroi latérale 22 du lobe. Ici, par exemple, le capot 34 a sensiblement une partie plate correspondant à la forme de l'ouverture, raccordée aux bords latéraux de l'ouverture par des parois sensiblement transverses. Par ailleurs, la partie plate s'écarte progressivement de la paroi latérale 22 du lobe, de manière à former une rampe débouchant sur l'orifice de sortie de l'écope 26.

Ici, les bords latéraux 30, 31 de l'ouverture ont un angle d'écartement qui augmente en allant vers l'aval, donnant une forme convexe à l'ouverture. Cela peut créer un effet de tuyère divergente aspirant l'écoulement F'₁ qui suit la rampe formée par le capot 34.

De cette manière, comme c'est illustré sur les figures 3a et 3b, la partie F'₁ de l'écoulement de flux primaire est aspirée le long du capot pour déboucher dans le flux secondaire F₂ par l'orifice de sortie, avec une orientation générale donnée par l'orientation Y de l'ouverture, en suivant l'inclinaison de la rampe du capot 34. Cet écoulement F'₁ sort également de l'écope 26 en s'évasant suivant l'angle d'écartement entre les bords latéraux 30, 31 de l'ouverture.

L'écope 26 crée donc à son niveau un effet de cisaillement tangentiel supplémentaire par rapport à celui qui se crée à l'extrémité aval 18 des lobes 20, 21. De plus, comme l'indiquent les figures 3a et 3b, la partie F'₁ de l'écoulement primaire qui la traverse a tendance à former, à son passage, des structures tourbillonnaires qui amplifient les effets de mélange avec le flux secondaire partie F₂ qu'elle rencontre en sortie de l'écope 26.

Ce premier mode de réalisation, en référence aux figures 4a, 4b, présente une écope 26 située sensiblement au milieu de chaque paroi latérale 22, 23, suivant les directions axiales et radiales, et dont la direction d'orientation Y est sensiblement alignée avec les lignes de courant du flux primaire F₁ et du flux secondaire F₂.

Dans les variantes présentées sur les figures 5a, 5b et 5c, la position et l'orientation des écopes 26 peuvent être modifiées. Sur les figures 5a et 5b, l'orientation Y de l'écope 26 peut former un angle d'incidence positive ou négative (convergentes et divergentes) par rapport à l'axe longitudinal LL', de manière à créer un effet d'incidence. Sur la figure 5c, la position axiale de l'écope 26 est déplacée, de manière à modifier l'interaction du cisaillement qu'elle crée avec celui créé par les lobes 20, 21, en sortie 18 du mélangeur 8.

Dans un second mode de réalisation, en référence au figures 6a et 6b, une première écope 26 décrite précédemment est associée, sur une même paroi latérale, à une deuxième écope 27, similaire à la première mais inversée par rapport à la traversée de la paroi latérale 22, 23 entre le lobe intérieur 20 et le lobe extérieur 21. La deuxième écope 27 a donc ici pour effet d'envoyer une partie F'₂ du flux secondaire, dans le flux primaire F₁ passant dans le lobe extérieur 21. Elle crée donc, cette fois, un effet de mélange supplémentaire dans le lobe extérieur 21.

La configuration présentée sur les figures 6a, et 6b place la deuxième écope 27 en amont de la première 26. Il est cependant envisageable de réaliser le contraire. De plus, les différentes variantes présentées dans les figures 5a-5c sur la position et l'orientation de l'écope 26 du premier mode de réalisation, sont bien sûr applicables à chacune des deux écopes 26, 27 de ce mode de réalisation. Ainsi, les configurations présentées sur les figures 5c et 6a-6b peuvent se généraliser, et il entre dans l'invention de pouvoir disposer une pluralité d'écopes sur au moins un lobe, la taille des écopes pouvant être adaptée pour disposer un nombre d'écopes supérieur à deux.

## Revendications

1. Mélangeur à lobes (8), destiné à être placé à l'extrémité aval d'un capot (4) de séparation des deux veines coaxiales, respectivement interne (6) et externe (7), le mélangeur (8) comprenant au moins une succession périphérique de lobes (20, 21) d'orientation générale radiale par rapport à un axe longitudinal (LL') du mélangeur, chaque lobe (20, 21) formant une goulotte s'étendant principalement suivant l'axe longitudinal, et au moins une succession périphérique d'écopes (26) de passage depuis la première veine (6) jusqu'à la deuxième veine (7) et/ou, inversement, de passage depuis la deuxième veine (7) jusqu'à la première veine (6), placées sur lesdits lobes (20, 21), au moins l'une desdites écopes (26) étant formée par une ouverture d'une paroi (22, 23) du mélangeur au niveau des lobes, l'ouverture étant allongée suivant une direction (Y) donnée de composante principalement axiale, et par un capot (34) situé entièrement du côté d'une desdites première veine (6) et deuxième veine (7) par rapport à ladite paroi (22, 23), ledit capot (34) étant raccordé au bord de l'ouverture sauf sur une partie aval (33), de manière à constituer un orifice de passage entre les deux veines, **caractérisé en ce que** le bord de ladite ouverture comporte deux parties latérales (30, 31) qui s'écartent progressivement en allant de l'amont vers l'aval jusqu'à la partie aval (33).

2. Mélangeur à lobes (8) selon la revendication précédente, dans lequel les deux parties latérales (30, 31) du bord de l'ouverture donnent une forme convexe à ladite ouverture.

3. Mélangeur à lobes (8) selon l'une des revendications précédentes, dans lequel le capot présente une partie plate correspondant à la forme de l'ouverture et s'écartant progressivement de la paroi du lobe de manière à former une rampe.

4. Mélangeur à lobes (8) selon l'une des revendications précédentes, comportant plusieurs desdites écopes (26, 27) entre des lignes de fond (24, 25) des goulottes formées par deux lobes (20, 21) successifs dans le sens circonférentiel.

5. Mélangeur à lobes selon l'une des revendications précédente, comportant deux écopes (26, 27) ayant des directions d'allongement (Y) différentes entre des lignes de fond (24, 25) des goulottes formées par deux lobes (20, 21) successifs dans le sens circonférentiel.

6. Mélangeur à lobes (8) selon l'une des revendications précédentes comportant au moins une écope (26) de passage depuis la première veine (6) jusqu'à la deuxième veine (7) et une écope (27) de passage depuis la deuxième veine (7) jusqu'à la première veine (6), entre des lignes de fond (24, 25) des goulottes formées par deux lobes (20, 21) successifs dans le sens circonférentiel.

7. Mélangeur à lobes selon l'une des revendications précédentes, dans lequel lesdits lobes (20, 21) forment des goulottes dont des lignes de fond (24, 25) avec alternativement un angle d'incidence positive et négative vers l'aval par rapport à l'axe longitudinal (LL') se succèdent de manière circonférentielle.

8. Turbomachine comportant un mélangeur à lobes (8) selon l'une des revendications précédentes.

## Patentansprüche

1. Mischer mit Lappen (8), der dazu bestimmt ist, an dem stromabwärtigen Ende einer Trennungshaube (4) der zwei koaxialen Ströme, jeweils einem inneren (6) und einem äußeren (7), platziert zu sein, wobei der Mischer (8) mindestens eine umfängliche Abfolge von Lappen (20, 21) mit allgemein radialer Ausrichtung bezüglich einer Längsachse (LL') des Mischers umfasst, wobei jeder Lappen (20, 21) eine Rutsche bildet, die sich hauptsächlich gemäß der Längsachse erstreckt, und mindestens eine umfängliche Abfolge von Schöpfern (26) mit einer Durchführung ausgehend von dem ersten Strom (6) bis zu dem zweiten Strom (7) und/oder, umgekehrt, mit einer Durchführung von dem zweiten Strom (7) bis zu dem ersten Strom (6), die auf den Lappen (20, 21) platziert sind, wobei mindestens einer der Schöpfer (26) durch eine Öffnung einer Wand (22, 23) des Mischers im Bereich der Lappen gebildet ist, wobei die Öffnung gemäß einer gegebenen Richtung (Y) mit hauptsächlich axialer Komponente ausgedehnt ist, und durch eine Haube (34), die vollständig auf der Seite eines des ersten Stroms (6) und des zweiten Stroms (7) bezüglich der Wand (22, 23) liegt, wobei die Haube (34) an den Rand der Öffnung mit Ausnahme auf einem stromabwärtigen Teil (33) derart anschließt, dass eine Durchführungsöffnung zwischen den zwei Strömen ausgebildet wird, **dadurch gekennzeichnet, dass** der Rand der Öffnung zwei seitliche Teile (30, 31) umfasst, die sich allmählich von stromaufwärts nach stromabwärts bis zu dem stromabwärtigen Teil (33) entfernen.

2. Mischer mit Lappen (8) nach dem vorstehenden Anspruch, wobei die zwei seitlichen Teile (30, 31) des Rands der Öffnung der Öffnung eine konvexe Form verleihen.

3. Mischer mit Lappen (8) nach einem der vorstehenden Ansprüche, wobei die Haube einen flachen Teil aufweist, der der Form der Öffnung entspricht und sich allmählich von der Wand des Lappens derart entfernt, dass eine Rampe gebildet wird.

4. Mischer mit Lappen (8) nach einem der vorstehenden Ansprüche, der mehrere der Schöpfer (26, 27) zwischen Grundlinien (24, 25) der Rutschen, die von den zwei aufeinanderfolgenden Lappen (20, 21) in der Umfangsrichtung gebildet werden, umfasst.

5. Mischer mit Lappen nach einem der vorstehenden Ansprüche, der zwei Schöpfer (26, 27) umfasst, die unterschiedliche Ausdehnungsrichtungen (Y) zwischen den Grundlinien (24, 25) der Rutschen, die von zwei aufeinanderfolgenden Lappen (20, 21) in der Umfangsrichtung gebildet werden, haben.

6. Mischer mit Lappen (8) nach einem der vorstehenden Ansprüche, der mindestens einen Schöpfer (26) mit Durchführung ausgehend von dem ersten Strom (6) bis zu dem zweiten Strom (7) und einen Schöpfer (27) mit Durchführung ausgehend von dem zweiten Strom (7) bis zu dem ersten Strom (6) zwischen Grundlinien (24, 25) der Rutschen, die von zwei aufeinanderfolgenden Lappen (20, 21) in der Umfangsrichtung gebildet werden, umfasst.

7. Mischer mit Lappen nach einem der vorstehenden Ansprüche, wobei die Lappen (20, 21) Rutschen bilden, deren Grundlinien (24, 25) einander mit abwechselnd einem positiven und einem negativen Einfallswinkel nach stromabwärts bezüglich der Längsachse (LL') auf umfängliche Art folgen.

8. Turbostrahltriebwerk, das einen Mischer mit Lappen (8) nach einem der vorstehenden Ansprüche umfasst.

## Claims

1. Lobed mixer (8), intended to be placed at the downstream end of a cowl (4) for separating the two coaxial ducts, namely the internal duct (6) and the external duct (7), the mixer (8) comprising at least one peripheral succession of lobes (20, 21) having a general radial orientation with respect to a longitudinal axis (LL') of the mixer, each lobe (20, 21) forming a gutter extending mainly along the longitudinal axis, and comprising at least one peripheral succession of scoops (26) for passage from the first duct (6) to the second duct (7) and/or, inversely, for passage from the second duct (7) to the first duct (6), which scoops are placed on said lobes (20, 21), at least one of said scoops (26) being formed by an opening in a wall (22, 23) of the mixer in the region of the lobes, the opening being elongate in a given direction (Y) having a mainly axial component, and by a cover (34) located entirely on either the first duct (6) side or the second duct (7) side with respect to said wall (22, 23), said cover (34) being connected to the edge of the opening apart from over a downstream portion (33), so as to form a hole for passage between the two ducts, **characterised in that** the edge of said opening comprises two side portions (30, 31) which gradually diverge from one another going from upstream to downstream until the downstream portion (33).

2. Lobed mixer (8) according to the preceding claim, wherein the two side portions (30, 31) at the edge of the opening give said opening a convex shape.

3. Lobed mixer (8) according to any of the preceding claims, wherein the cover has a flat portion which corresponds to the shape of the opening and which gradually diverges from the wall of the lobe so as to form a slope.

4. Lobed mixer (8) according to any of the preceding claims, comprising a plurality of said scoops (26, 27) between the base lines (24, 25) of the gutters formed by two successive lobes (20, 21) in the circumferential direction.

5. Lobed mixer according to any of the preceding claims, comprising two scoops (26, 27) having different elongation directions (Y) between the base lines (24, 25) of the gutters formed by two successive lobes (20, 21) in the circumferential direction.

6. Lobed mixer (8) according to any of the preceding claims, comprising at least one scoop (26) for passage from the first duct (6) to the second duct (7) and one scoop (27) for passage from the second duct (7) to the first duct (6), between the base lines (24, 25) of the gutters formed by two successive lobes (20, 21) in the circumferential direction.

7. Lobed mixer according to any of the preceding claims, wherein said lobes (20, 21) form gutters of which the base lines (24, 25), having alternately a positive angle of incidence and a negative angle of incidence in the downstream direction with respect to the longitudinal axis (LL'), are circumferentially successive.

8. Turbine engine comprising a lobed mixer (8) according to any of the preceding claims.
